# EUROPÄISCHE PATENTSCHRIFT

(11) **EP 2 359 098 B1**
(45) Veröffentlichungstag und Bekanntmachung des Hinweises auf die Patenterteilung: **26.06.2013**
(21) Anmeldenummer: 09765062.6
(22) Anmeldetag: 23.11.2009
(51) Int. Cl.: G01D 11/24, G01L 19/14

(54) **DIFFERENZDRUCKMESSUMFORMER**
DIFFERENTIAL PRESSURE TRANSDUCER
CONVERTISSEUR DE MESURE DE PRESSION DIFFÉRENTIELLE

(30) Priorität: 19.12.2008 DE 102008054991
(43) Veröffentlichungstag der Anmeldung: 24.08.2011
(73) Patentinhaber: Endress+Hauser GmbH+Co. KG, 79689 Maulburg (DE)
(72) Erfinder: HUMPERT, Axel, 77866 Reinau (DE); TANNER, Jürgen, 79400 Kandern (DE)
(74) Vertreter: Andres, Angelika Maria
(86) Internationale Anmeldenummer: PCT/EP2009/065599
(87) Internationale Veröffentlichungsnummer: WO 2010/069710

(56) Entgegenhaltungen:
- WO-A-01/23857
- DE-A1- 10 347 861
- US-A- 4 172 388
- US-B1- 6 279 401

## Beschreibung

Die Erfindung betrifft einen Differenzdruckmessumformer.

Gattungsgemäße Differenzdruckmessumformer zum Erfassen einer Druckdifferenz zwischen einem ersten Mediendruck und einem zweiten Mediendruck umfassen gewöhnlich eine Sensorbaugruppe und eine Auswertungsbaugruppe,
wobei die Sensorbaugruppe einen Differenzdrucksensor, einen ersten Prozessanschlussflansch und einen zweiten Prozessanschlussflansch umfasst,
wobei der Differenzdrucksensor zwischen dem ersten Prozessanschlussflansch und dem zweiten Prozessanschlussflansch axial eingespannt ist,
wobei die Sensorbaugruppe mittels der Prozessanschlussflansche an einer Prozessanlage montierbar ist,
wobei der Differenzdrucksensor über den ersten Prozessanschlussflansch mit einem ersten Mediendruck und über den zweiten Prozessanschlussflansch mit einem zweiten Mediendruck beaufschlagbar ist,
wobei der Differenzdrucksenor einen Signalausgang aufweist, um ein Signal auszugeben, welches eine gemessene Differenz zwischen dem ersten Mediendruck und dem zweiten Mediendruck repräsentiert,
wobei die Auswertebaugruppe ein Gehäuse und eine elektronische Auswertungsschaltung in dem Gehäuse aufweist,
wobei die Auswertungsschaltung einen Signaleingang aufweist,
wobei das Gehäuse eine Eingangsöffnung aufweist, durch welche der Singalausgang des Differenzdrucksensors an den Signaleingang der Auswerteschaltung angeschlossen ist, und
wobei die Auswertungsbaugruppe mechanisch von der Sensorbaugruppe gehalten ist.

Hierzu wird gewöhnlich das Gehäuse der Auswertebaugruppe mit einem Gehäusehals, in weichem die Eingangsöffnung angeordnet ist, gewöhnlich auf ein Anschlussgewinde geschraubt, welches aus der Mantelfläche eines zylindrischen Differenzdrucksensors herausragt. Der beschriebene Aufbau ist bewährt. Entsprechende Differenzdruckmessumformer werden beispielsweise von der Anmelderin unter der Bezeichnung Deltabar oder von der Firma Rosemount unter der Bezeichnung 1151 hergestellt und in Verkehr gebracht. Weitere Ausgestaltungen dieses Prinzips sind beispielsweise in EP 0 843 810 B1 und in der Internationalen Patentanmeldung WO 96/06338 offenbart.

Die Offenlegungsschrift DE 103 47 861 A1 offenbart einen Differenzdruckmessumformer, mit einem Differenzdrucksensor, der im Nebenschluss mit einem ihn umgebenden zylindrischen Rohr zwischen zwei Pozessanschlussflanschen eingespannt ist. Das zylindrische Rohr trägt auf seiner Mantelfläche ein Elektronikgehäuse.

Das Patent US 6 279 401 B1 offenbart einen weiteren Differenzdruckmessumformer

Insoweit als der Differenzdrucksensor zwischen den Prozessanschlussflanschen eingespannt ist, muss das Anschlussgewinde, auf das der Gehäusehals des Gehäuses der Auswertebaugruppe aufgeschraubt wird, vollständig aus dem Raum zwischen den Prozessanschlussflanschen herausgeführt sein, damit eine hinreichend stark dimensionierte Schraubverbindung zwischen dem Gehäuse und der Sensorbaugruppe nicht mit den Flaschen interferiert.

Dies führt zu einer in Richtung der Achse des Anschlussgewindes relativ langen Erstreckung des Differenzdruckmessumformers.

Es ist daher die Aufgabe der vorliegenden einen kompakteren Differenzdruckmessumformer bereitzustellen, der insbesondere den Anforderungen der industriellen Prozessmesstechnik genügt.

Die Aufgabe wird erfindungsgemäß gelöst durch den Differenzdruckmessumformer gemäß dem unabhängigen Patentanspruch 1.

Der Differenzdruckmessumformer umfasst einen Differenzdrucksensor, einen ersten Prozessanschlussflansch und einen zweiten Prozessanschlussflansch, wobei der Differenzdrucksensor zwischen dem ersten Prozessanschlussflansch und dem zweiten Prozessanschlussflansch und einer ersten und einer zweiten Dichtung eingespannt ist, wobei der Differenzdrucksensor über den ersten Prozessanschlussflansch mit einem ersten Mediendruck und über den zweiten Prozessanschlussflansch mit einem zweiten Mediendruck beaufschlagbar ist; ein Gehäuse welches eine elektronische Auswertungsschaltung enthält, wobei das Gehäuse eine Eingangsöffnung aufweist, durch welche der Differenzdrucksensors die Auswerteschaltung angeschlossen ist, und wobei das Gehäuse mindestens einen Fortsatz aufweist, der sich zwischen die ersten und den zweiten Prozessanschlussflansch erstreckt, wobei der Fortsatz im Nebenschluss zu dem Differenzdrucksensor zwischen den Flanschen eingespannt ist, so dass das Gehäuse von dem eingespannten Fortsatz gehalten wird, wobei erfindungsgemäß der Differenzdrucksensor einen Sensorhals aufweist, wobei sich der Sensorhals von einer Mantelfläche des Differenzdrucksensors in die Eingangsöffnung des Gehäuses erstreckt, wobei zwischen dem Sensorhals und der Eingangsöffnung des Gehäuses ein Ringspalt gebildet ist,
wobei der Signalausgang des Differenzdrucksensors durch den Sensorhals verläuft, und
wobei der Differenzdruckmessumformer weiterhin eine Führungshülse aufweist, welche in dem Ringspalt angeordnet ist.

Der erfindungsgemäße Differenzdruckmessumformer zum Erfassen einer Druckdifferenz zwischen einem ersten Mediendruck und einem zweiten Mediendruck umfasst anders dargestellt eine Sensorbaugruppe und eine Auswertungsbaugruppe,
wobei die Sensorbaugruppe einen Differenzdrucksensor, einen ersten Prozessanschlussflansch und einen zweiten Prozessanschlussflansch umfasst,
wobei der Differenzdrucksensor zwischen dem ersten Prozessanschlussflansch und dem zweiten Prozessanschlussflansch und einer ersten und einer zweiten Dichtung, die jeweils zwischen einem der Prozessanschlussflansche und dem Differenzdrucksensor angeordnet sind, eingespannt ist,
wobei die Sensorbaugruppe mittels der Prozessanschlussflansche an einer Prozessanlage montierbar ist,
wobei der Differenzdrucksensor über den ersten Prozessanschlussflansch mit einem ersten Mediendruck und über den zweiten Prozessanschlussflansch mit einem zweiten Mediendruck beaufschlagbar ist,
wobei der Differenzdrucksenor einen Signalausgang aufweist, um ein Signal auszugeben, welches eine gemessene Differenz zwischen dem ersten Mediendruck und dem zweiten Mediendruck repräsentiert,
wobei die Auswertebaugruppe ein Gehäuse und eine elektronische Auswertungsschaltung in dem Gehäuse aufweist,
wobei die Auswertungsschaltung einen Signaleingang aufweist,
wobei das Gehäuse eine Eingangsöffnung aufweist, durch welche der Signalausgang des Differenzdrucksensors an den Signaleingang der Auswerteschaltung angeschlossen ist, und
wobei die Auswertungsbaugruppe mechanisch von der Sensorbaugruppe gehalten ist; wobei
es an das Gehäuse mindestens ein Fortsatz anschließt, der sich zwischen die ersten und den zweiten Prozessanschlussflansch erstreckt,
wobei der Fortsatz im Nebenschluss zu dem Differenzdrucksensor zwischen den Flanschen eingespannt ist, so dass das Gehäuse von dem eingespannten Fortsatz gehalten wird, wobei erfindungsgemäß
der Differenzdrucksensor einen Sensorhals aufweist, wobei sich der Sensorhals von einer Mantelfläche des Differenzdrucksensors in die Eingangsöffnung des Gehäuses erstreckt, wobei zwischen dem Sensorhals und der Eingangsöffnung des Gehäuses ein Ringspalt gebildet ist,
wobei der Signalausgang des Differenzdrucksensors durch den Sensorhals verläuft, und
wobei der Differenzdruckmessumformer weiterhin eine Führungshülse aufweist, welche in dem Ringspalt angeordnet ist.

In einer Ausgestaltung der Erfindung umfasst der Fortsatz einen Rahmen, welcher den Differenzdrucksensor umschließt. In einer Weiterbildung dieser Ausgestaltung der Erfindung ist der Rahmen zumindest auf einer Seite, vorzugsweise auf beiden Seiten, entlang einer in sich geschlossenen Dichtfläche, die einen Dichtring, insbesondere einen Elastomerdichtring umfassen kann zwischen den Prozessanschlussflanschen eingespannt.

Die äußere Kontur des Rahmens in den ebenen der Dichtflächen fluchtet in einer bevorzugten Weiterbildung zudem mit der äußeren Kontur der Prozessanschlussflansche, abgesehen von ggf. vorhandenen Vorsprüngen an den Prozessanschlussflanschen, wobei diese Vorsprünge Öffnungen zur Druckeinleitung aufweisen.

Die erfindungsgemäße Konstruktion ermöglicht einen vergleichsweise kompakten und kostengünstigen Aufbau, da kein hinreichend starkes dimensioniertes Gewinde zum Tragen des Gehäuses auf der Mantelfläche eines Differenzdrucksensors angeordnet sein muss um eine Schraubverbindung zwischen dem Gehäuse und der Sensorbaugruppe zu gewährleisten. Weiterhin kann der Fortsatz bzw. der Rahmen aus dem Gehäusematerial gefertigt sein, was gewöhnlich kostengünstiger ist als die Werkstoffe der mechanischen Komponenten der Sensorbaugruppe.

In einer Weiterbildung der Erfindung ist der Anpressdruck auf die Dichtungen zwischen dem Differenzdrucksensor und den Prozessanschlussflanschen größer als der Anpressdruck, der auf die Dichtflächen zwischen dem Rahmen und den Prozessanschlussflächen wirkt. Insbesondere kann die Kraft auf die Dichtungen zwischen dem Differenzdrucksensor und den Prozessanschlussflanschen größer sein als jene Kraft, die auf die Dichtflächen zwischen dem Rahmen und den Prozessanschlussflächen wirkt.

In einer Weitebildung der Erfindung sind der Differenzdrucksensor und der Fortsatz mittels mehrerer Bolzen, insbesondere zwei, drei oder vier Bolzen, zwischen den Prozessanschlussflanschen eingespannt, wobei die Achsen der Bolzen im wesentlichen senkrecht zu den Dichtflächen verlaufen, und wobei Bolzen in einer derzeit bevorzugten Weiterbildung der Erfindung von einer äußeren Kontur des Rahmens umschlossen sind.

In einer derzeit bevorzugten Ausgestaltung der vorliegenden Erfindung Differenzdruckmessumformer weiterhin eine im wesentlichen axialsymmetrische, insbesondere zumindest abschnittsweise zylindrische Führungshülse, welche in einem Ringspalt angeordnet ist, der zwischen der Eingangsöffnung des Gehäuses und einem Sensorhals des Differenzdrucksensors gebildet ist, wobei sich der Sensorhals von einer Mantelfläche des Differenzdrucksensors in die Eingangsöffnung erstreckt, und wobei der Signalausgang des Differenzdrucksensors durch den Sensorhals verläuft. Die Führungshülse dient insbesondere dazu, die Achse des Sensorhalses bezüglich der Eingangsöffnung des Gehäuses auszurichten.

Die Hülse unterstützt damit den äußerst kompakten Aufbau des Differenzdruckmessumformers. Dies ist folgendermaßen zu verstehen. Wie oben diskutiert, ist anstelle eines massiven und langen Sensorhalses ein Rahmen am Gehäuse vorgesehen, um dem Gehäuse auf der Sensorbaugruppe ausreichend Stabilität zu verleihen. Dennoch ist es vorteilhaft, wenn ein (weniger massiver und ggf. kürzerer) Sensorhals mit dem Gehäuse in der Weise mechanische gekoppelt ist, dass die Achse des Sensorhalses bezüglich der Eingangsöffnung des Gehäuses ausgerichtet ist, um den Differenzdrucksensor bezüglich des Gehäuses und des Rahmens in eine definierte Position zu bringen. Das Erfordernis der Ausrichtung der Achse des Sensorhalses, steht aber zunächst dem entgegen, dass die Achse des Sensorhalses und damit der Differenzdrucksensor bezüglich des Gehäuses verkippt werden kann, was beim Einsetzen des Differenzdrucksensors in den Rahmen bei gleichzeitigen Einbringen des Sensorhalses in die Eingangsöffnung des Gehäuses von Vorteil wäre, denn ohne die Möglichkeit des Verkippens der Achse des Sensorhalses, müsste die lichte Höhe des Rahmens mindestens so groß sein, wie die maximale Höhe des Differenzdrucksensors in Richtung der Achse des Sensorhalses. Insoweit, als die Ausrichtung der Achse des Sensorhalses durch eine nach dem Einsetzen des Differenzdrucksensors in den Rahmen zu montierende Hülse erfolgt, kann der Differenzdrucksensor bei dem Einsetzen in den Rahmen sehr wohl verkippt werden. Damit kann die lichte Höhe des Rahmens bedeutend niedriger dimensioniert werden.

Die Ausgestaltung des Fortsatzes als Rahmen wirft noch ein weiteres Problem auf, welches zu lösen ist.

Bisherige Differenzdruckmessumformer waren gewöhnlich so gestaltet, dass bei einem Versagen einer Dichtung zwischen einem Prozessanschlussflansch und dem Differenzdrucksensor, das Messmedium zwar in die Umgebung des Differenzdruckmessumformers gelangte, aber nicht in das Gehäuse eingeleitet wurde. Mit der vorliegenden Konstruktion, ist theoretisch die Möglichkeit dazu gegeben, weshalb entsprechende Maßnahmen vorzusehen sind, die dieses verhindern. Hierzu ist insbesondere für den Fall, dass Signalanschlussleitungen an das Gehäuse in Rohren geführt werden, eine so genannte zweite Eindämmung (Englisch: Second Containment) vorzusehen, welche nach Ausfall einer Prozessdichtung, also einer Dichtung zwischen einem Prozessanschlussflansch und dem Differenzdrucksensor, verhindert, dass ein unter Druck stehendes Medium unbemerkt in das Gehäuse bzw. in die Rohre gelangt.

Vorzugsweise umfasst die Hülse deshalb eine erste Hülsendichtfläche und das Gehäuse eine die Eingangsöffnung umgebende Eingangsdichtfläche, wobei mittels der Eingangsdichtfläche und der ersten Hülsendichtfläche sowie einer ggf. eines dazwischen angeordneten Dichtrings eine erste Öffnung zwischen der Hülse und dem Gehäuse gegenüber dem abgedichtet ist.

Vorzugsweise umfasst die Hülse weiterhin noch eine zweite Hülsendichtfläche und der Sensorhals eine ringförmige Sensorhalsdichtfläche, wobei mittels der Sensorhalsdichtfläche und der zweiten Hülsendichtfläche sowie einer ggf. eines dazwischen angeordneten Dichtrings ein zweite Öffnung zwischen der Hülse und dem Sensorhals abgedichtet ist.

Die Abdichtungen der ersten Öffnung und der zweiten Öffnung sind in einer Weiterbildung der Erfindung so ausgelegt, dass sie den Ausfall einer Prozessdichtung zumindest für einen definierten Zeitraum überstehen, der beispielsweise erforderlich ist, um einen aufgrund des Ausfalls der Prozessdichtung an den Abdichtungen anstehenden Überdruck abzubauen.

Zum Abbau des Überdrucks kann beispielsweise eine Bohrung, die ggf. einen Filter enthalten kann, durch den Rahmen vorgesehen sein, und/oder mindestens eine der Dichtungen zwischen dem Rahmen und den Prozessanschlussflanschen kann so schwach dimensioniert sein, dass sie bei Auftreten eines Überdrucks nach Versagen einer Prozessdichtung sofort versagt und damit den Druckabbau ermöglicht.

Die erste Öffnung und/oder die zweite Öffnung können insbesondere Ringspalt umfassen, wobei der Ringspalt insbesondere zwischen glatten, zylindrischen Mantelflächen oder Mantelflächen mit aufgeprägten Gewindegängen verlaufen kann. Derzeit ist es bevorzugt dass die ersten Öffnung und die zweite Öffnung, jeweils die Anforderung an eine Flammendurchschlagsperre insbesondere erfüllen. Im Falle eines Ringspalts mit glatten zylindrischen Mantelflächen erfordert dies bei einer gegebenen Länge des Spalts, dass ein kritischer, maximaler Abstand der den Spalt begrenzenden Mantelflächen nicht überschritten werden darf. Im Falle eines Ringspalts der zwischen zwei Mantelflächen mit Gewindegängen gebildet ist, gilt dies entsprechend. Für Einzelheiten sei Beispielsweise auf die Anforderungen an Flammendurchschlagsperren nach der Zündschutzklasse Ex-d verwiesen.

In einer Weiterbildung der Erfindung weist die Hülse eine äußere Mantelfläche mit einem Gewinde auf, welches in ein komplementäres Innengewinde in der die Eingangsöffnung umgebende Wand des Gehäuses eingreift. Die Innere Mantelfläche der Hülse ist in dieser Ausgestaltung im Wesentlichen glatt. Beide Mantelflächen der Hülse erfüllen mit den ihnen jeweils gegenüberliegenden Flächen Flammendurchschlagsperren insbesondere nach der Zündschutzklasse Ex-d.

Gemäß einer Weiterbildung der Erfindung umfasst die Sensorbaugruppe einen Positionierkörper, welcher die Position des Differenzdrucksensor in dem Rahmen definiert. Der Positionierkörper kann beispielsweise die Mantelfläche des Differenzdrucksensors zumindest abschnittsweise umgreifen und den Differenzdrucksensor ergänzend zur Hülse bezüglich des Rahmens ausrichten. Der Positionierkörper, kann insbesondere ein Kunststoffkörper sein, der insbesondere so flexibel ist, dass er einer Anpassung der Position der Druckmesszelle unter den Einspannkräften seitens der Prozessanschlussflansche nicht entgegensteht.

Die Erfindung wird nun anhand eines in den Zeichnungen dargestellten Ausführungsbeispiels erläutert. Es zeigt:
- Fig. 1:: eine perspektivische Darstellung des Gehäusekörpers eines erfindungsgemäßen Differenzdruckmessumformers;
- Fig. 2:: eine perspektivische Darstellung eines teilmontierten erfindungsgemäßen Differenzdruckmessumformers; und
- Fig. 3:: eine Schnittansicht eines erfindungsgemäßen Differenzdruckmessumformers.

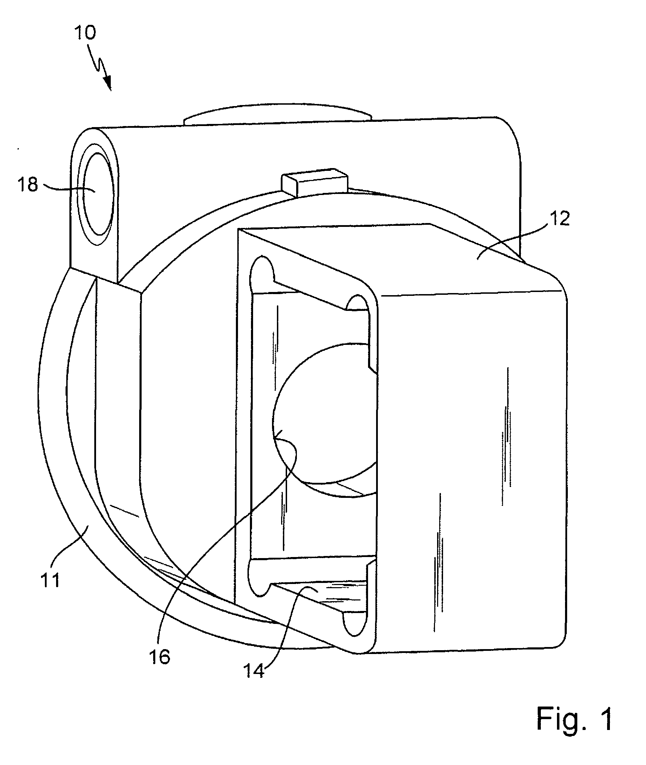

Der in Fig. 1 dargestellte Gehäusekörper 10 umfasst ein Gehäuse 11, welches abgesehen von funktionsbedingten Abweichungen einen im wesentlichen rotationssymmetrischen Aufbau um eine Gehäuselängsachse aufweist. An den Boden des Gehäuses 11 schließt ein Rahmen 12 an, der eine im wesentlichen rechteckige Sensoraufnahme 14 umschließt. Die planparallelen Stirnseiten des Rahmens 12 verlaufen im wesentlichen parallel zur Gehäuselängsachse. Im Boden des Gehäuses 11 ist eine Eingangsöffnung 16 angeordnet, deren Achse mit der Gehäuselängsachse fluchtet. In dieser Eingangsöffnung ist der Hals eines Differenzdrucksensors zu positionieren. Fig. 1 zeigt weiterhin eine Signalausgangsöffnung 18, durch welche im Messbetrieb, Signal- und Versorgungsleitungen in das Gehäuse 11 geführt werden.

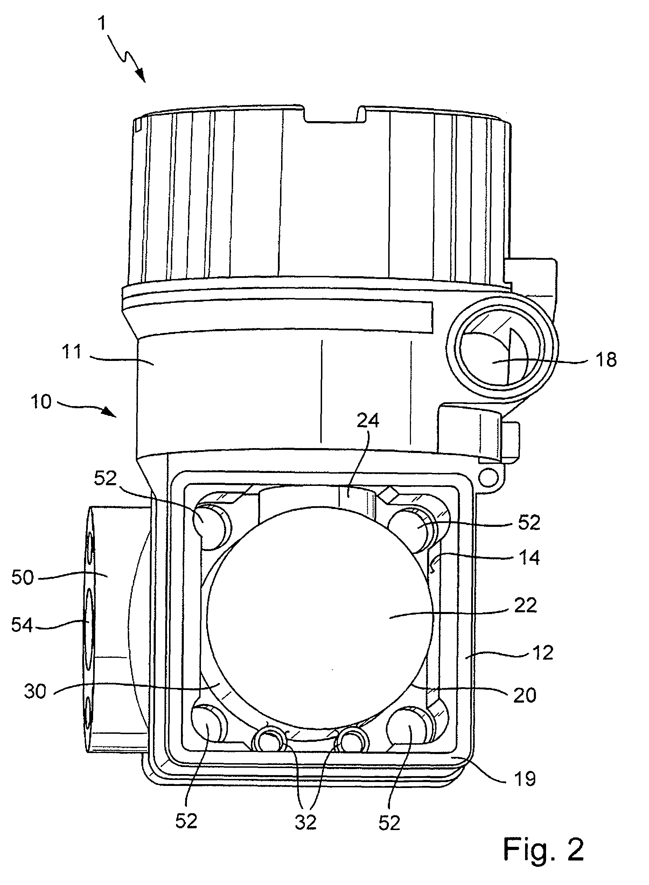

Fig. 2 zeigt einen teilmontierten Differenzdruckmessumformer 1, mit dem anhand von Fig. 1 erläuterten Gehäusekörper 10, in dessen Sensoraufnahme 14 ein Differenzdrucksensor 20 eingesetzt ist. Der Differenzdrucksensor 20 umfasst einen im wesentlichen zylindrischen Sensorkörper 22, dessen Achse senkrecht zur Achse des Gehäuselängsachse und zu den Stirnflächen des Rahmens 12 verläuft. verläuft. Die beiden Stirnseiten des Sensorkörpers 22 sind im Messbetrieb mit einem ersten bzw. zweiten Druck zu beaufschlagen, wobei der Differenzdrucksensor ein Primärsignal bereitstellt, welches der Differenz zwischen dem ersten und dem zweiten Druck entspricht. Um das Primärsignal des Differenzdrucksensors 20 einer Auswertungsschaltung in dem Gehäuse 11 zuführen zu können, weist der Differenzdrucksensor 20 einen im wesentlichen zylindrischen Sensorhals 24 auf, durch den elektrische Durchführungen verlaufen, wobei die Längsachse des Sensorhalses 24 mit der Gehäuselängsachse fluchtet, und wobei der Sensorhals 24 sich in die Eingangsöffnung 16 des Gehäuses 11 erstreckt. Um den Differenzdrucksensor 20 in der Sensoraufnahme 14 in der gewünschten Position und Ausrichtung zu halten, ist auf der Mantelfläche des Sensorkörpers 22 ein Positionierkörper 30 beispielsweise aus Kunststoff angeordnet, welcher den Sensorkörper zumindest abschnittsweise umgreift, und welcher Abstandhalter 32 aufweist, die sich am Rahmen 12 abstützen, um die Position und Orientierung des Sensorkörpers 22 festzulegen. Die Abstandhalter 32 sind hier ringförmig gestaltet, was ihnen eine gewisse Flexibilität verleiht.

In Fig. 2 ist weiterhin ein Prozessanschlussflansch 50 dargestellt, welcher an der rückseitigen Stirnfläche des Rahmens 12 anliegt, um die rückseitige Stirnfläche des Sensorkörpers 22 mit einem ersten Mediendruck zu beaufschlagen. Hierzu weist der Prozessanschlussflansch einen Kanal auf, der sich von einer Öffnung 54 in einer in der Zeichnung sichtbaren Prozessanschlussfläche durch den Prozessanschlussflansch bis zu einer Öffnung erstreckt, die etwa auf der Achse des Sensorkörpers 22 liegt. Bei einem fertig montierten, betriebsbereiten Differenzruckmessumformer 1, ist auch auf der in Fig. 2 freien Stirnfläche des Rahmens 12 ein Prozessanschlussflansch angeordnet, um die frontseitige Stirnfläche des Sensorkörpers 22 mit einem zweiten Mediendruck zu beaufschlagen, wobei die beiden Prozessanschlussflansche 50 mit vier Bolzen, die durch Bohrungen 52 in den Prozessanschlussflanschen verlaufen, gegeneinander gespannt sind, um den Sensorkörper 22 mit auf den beiden Stirnflächen des Sensorkörpers angeordneten Prozessdichtungen zwischen sich eingespannt zu halten, wobei außerdem der Rahmen 12 des Gehäusekörpers 10 im Nebenschluss gehalten wird. Um dem Rahmen 12 im Nebenschluss unter definierter Spannung zu halten, ohne die Integrität der Prozessdichtungen zu beeinträchtigen, ist auf jeder Stirnseite des Rahmens 12 eine umlaufende Vertiefung 19 vorgesehen, welche als Aufnahme für eine elastische Spannschnur dient. Die elastischen Spannschnüre können zugleich als Dichtung dienen, dies ist aber nicht zwingend erforderlich.

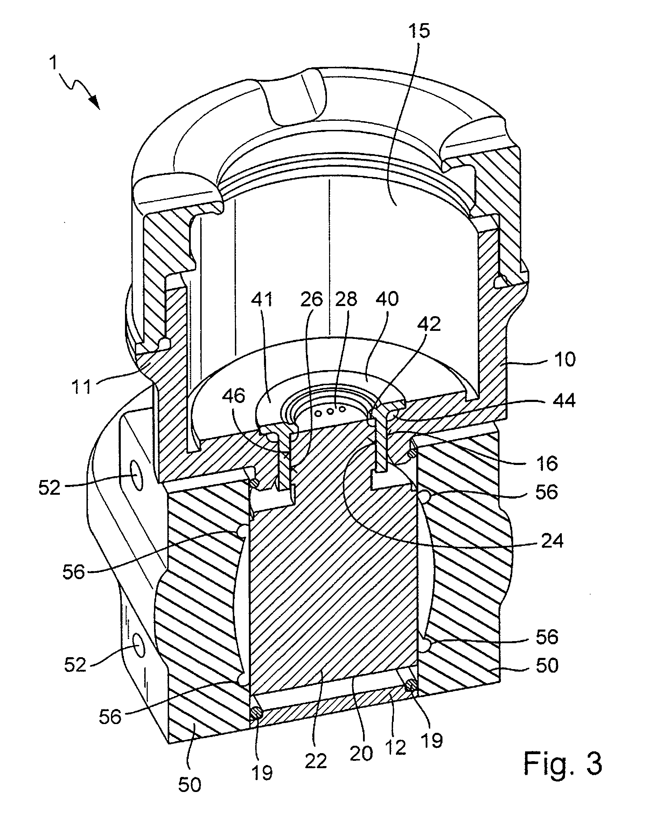

Weitere Einzelheiten des Aufbaus werden nun anhand von Fig. 3 erläutert, die einen Längsschnitt entlang der Gehäuselängsachse zeigt, wobei der zwischen den beiden Prozessanschlussflanschen 50 eingespannte Sensorkörper 22 des Differenzdrucksensors 20 im unteren Teil der Fig. 3 zu erkennen ist. Die Flansche weisen jeweils eine ringförmig umlaufende Vertiefung 56 auf, welche jeweils einen hier nicht dargestellten elastische O-Ring aufnimmt der druckdicht gegen die angrenzende Stirnfläche des Sensorkörpers 22 gespannt wird.

In der Vertiefung 19 am inneren Rand des Rahmens 12 ist eine elastische Spannschnur angeordnet, welche ebenfalls durch die Prozessanschlussflansche 50 gespannt wird, wodurch der Rahmen 12 - und mit ihm der gesamte Gehäusekörper 10 - bezüglich der Flansche und des ebenfalls eingespannten Differenzdrucksensors 20 in Position gehalten wird.

Das Gehäuse 11 enthält in seinem Innern eine Gehäusekammer 15, in welcher eine hier nicht dargestellte Auswertungsschaltung angeordnet ist. Um einerseits den Sensorhals 24 in der Eingangsöffnung 16 des Gehäuses in Position zu halten und andererseits die Gehäusekammer 15 gegenüber der von dem Rahmen 12 umgebenen Sensoraufnahme 14 abzudichten, ist eine Hülse 40 vorgesehen, welche gemäß einer Ausgestaltung auf den Sensorhals aufgeschoben und mittels einem Außengewinde auf ihrer Mantelfläche mit einem komplementären Innengewinde in der Wand der Eingangsöffnung 16 verschraubt ist. Zwischen der Innenwand 46 der Hülse 40 und der Mantelfläche 26 des Sensorhalses 24 ist ein Ringspalt ausgebildet, welcher die Anforderungen an eine Flammendurchschlagsperre der Zündschutzart ex-d erfüllt. Die Gewindepaarung kann ebenfalls die Anforderungen an eine Flammendurchschlagsperre der Zündschutzart ex-d erfüllen.

Die Hülse 40 weist weiterhin eine ringscheibenförmig ausgebildete Stirnfläche 41 auf, welche sich einerseits von der Innenwand 46 radial einwärts erstreckt um eine erste Hülsendichtfläche 42 auszubilden, an welcher ein erster Dichtring anliegt, der zwischen der ersten Hülsendichtfläche 42 und einer dazu komplementären Dichtfläche am Sensorhals eingespannt ist, wobei sich die Stirnflache 41 andererseits von der Mantelfläche der Hülse 40 radial auswärts erstreckt, um eine zweite Hülsendichtfläche 44 auszubilden, an welcher ein zweiter Dichtring anliegt, der zwischen der ersten Hülsendichtfläche 44 und einer dazu komplementären Dichtfläche am Rand oder nahe der Eingangsöffnung 16 des Gehäusekörpers 10 eingespannt ist. Mit diesen Dichtungen ist eine zweite Eindämmung realisiert, welche verhindert, dass nach einem Ausfall einer Prozessdichtung das Prozessmedium in die Gehäusekammer 15 gelangen kann.

Ggf. kann in dem Rahmen 12 ein Überdruckventil oder eine Berstscheibe angeordnet sein, wobei diese so dimensioniert sind dass sie einen Druckabbau in der Sensoraufnahme 14 ermöglichen, bevor die Dichtungen zur Gehäusekammer 15 versagen.

An der Stirnseite 28 sind die elektrischen Anschlüsse für den Differenzdrucksensor angeordnet, über welche dieser an die hier nicht dargestellte Auswerteschaltung in der Gehäusekammer angeschlossen ist.

Der Differenzdrucksensor 20 ist in Fig. 3 zum Zwecke der Übersichtlichkeit im Schnitt als massiver Klotz dargestellt. Dies entspricht selbstverständlich nicht den tatsächlichen Gegebenheiten. Der Sensorkörper 22 enthält ein dem Fachmann geläufiges, hier nicht dargestelltes Messwerk mit einem Halbleiter-Differenzdruckmesswandler, wie es beispielsweise in EP 1299701 B1 beschrieben ist, wobei das Messwerk an den Stirnflächen des Sensorkörpers jeweils eine metallische Trennmembran aufweist, welche einen hydraulischen Pfad verschließt, der sich von der jeweiligen Stirnfläche zu einer Seite einer Messmembran des Halbleiter-Differenzdruckmesswandlers erstreckt. Gleichermaßen kann ein kapazitiver Differenzdrucksensor vorgesehen sein. Im Sensorhals ist beispielsweise eine elektronische Schaltung zur Aufbereitung der Signale des Halbleiter-Differenzdruckmesswandlers vorgesehen. Da es im Zusammenhang mit der vorliegenden Erfindung, welche im wesentlichen die konstruktive Integration eines Differenzdrucksensors in das Gehäuse eines Differenzdruckmessumformers betrifft, nicht auf die Einzelheiten der Sensorik und der Signalverarbeitung ankommt, sind diese Vereinfachungen der Darstellung gerechtfertigt.

## Patentansprüche

1. Differenzdruckmessumformer (1), umfassend:
einen Differenzdrucksensor (20), welcher einen Signalausgang ausweist, um ein Signal auszugeben, welches von einer gemessenen Differenz zwischen einem ersten Mediendruck und einem zweiten Mediendruck abhängt, oder diese Differenz repräsentiert,
einen ersten Prozessanschlussflansch (50) und einen zweiten Prozessanschlussflansch (50),
wobei der Differenzdrucksensor (20) zwischen dem ersten Prozessanschlussflansch (50) und dem zweiten Prozessanschlussflansch (50) und einer ersten und einer zweiten Dichtung eingespannt ist, wobei die Dichtungen jeweils zwischen einem der Prozessanschlussflansche und dem Differenzdrucksensor angeordnet sind,
wobei der Differenzdrucksensor über den ersten Prozessanschlussflansch mit dem ersten Mediendruck und über den zweiten Prozessanschlussflansch mit dem zweiten Mediendruck beaufschlagbar ist;
ein Gehäuse (11) welches eine elektronische Auswertungsschaltung enthält, wobei das Gehäuse (11) eine Eingangsöffnung (16) aufweist, durch welche derSignalausgang des Differenzdrucksensors an einen Signaleingang der Auswertungsschaltung angeschlossen ist, und wobei das Gehäuse (11) mindestens einen Fortsatz (12) aufweist, der sich zwischen die ersten und den zweiten Prozessanschlussflansch (50) erstreckt, wobei der Fortsatz (12) im Nebenschluss zu dem Differenzdrucksensor (20) zwischen den Flanschen (50) eingespannt ist, so dass das Gehäuse von dem eingespannten Fortsatz gehalten wird,
**dadurch gekennzeichnet, dass**
der Differenzdrucksensor einen Sensorhals aufweist, wobei sich der Sensorhals von einer Mantelfläche des Differenzdrucksensors in die Eingangsöffnung des Gehäuses erstreckt, wobei zwischen dem Sensorhals und der Eingangsöffnung des Gehäuses ein Ringspalt gebildet ist,
wobei der Differenzdruckmessumformer weiterhin eine Führungshülse aufweist, welche in dem Ringspalt angeordnet ist.

2. Differenzdruckmessumformer nach Anspruch 1, wobei der Fortsatz einen Rahmen (12) aufweist, welcher den Differenzdrucksensor umschließt.

3. Differenzdruckmessumformer nach Anspruch 2, wobei der Rahmen zumindest auf einer Seite, vorzugsweise auf beiden Seiten, entlang einer in sich geschlossenen Dichtfläche (19), zwischen den Prozessanschlussflanschen (50) eingespannt ist.

4. Differenzdruckmessumformer nach Anspruch 2 oder 3, wobei die äußere Kontur des Rahmens in den Ebenen der Dichtflächen mit der äußeren Kontur der Prozessanschlussflansche fluchtet.

5. Differenzdruckmessumformer nach Anspruch 2, 3 oder 4, wobei der Differenzdrucksensor und der Fortsatz mittels mehrerer Bolzen zwischen den Prozessanschlussflanschen eingespannt sind.

6. Differenzdruckmessumformer nach Anspruch 5, wobei die Bolzen von einer äußeren Kontur des Rahmens umschlossen sind.

7. Differenzdruckmessumformer nach einem der Ansprüche 1 bis 6, wobei die Hülse eine erste Hülsendichtfläche umfasst, und das Gehäuse eine die Eingangsöffnung umgebende Eingangsdichtfläche umfasst, wobei mittels der Eingangsdichtfläche und der ersten Hülsendichtfläche sowie einer ggf. eines dazwischen angeordneten Dichtrings eine erste Öffnung zwischen der Hülse und dem Gehäuse abgedichtet ist.

8. Differenzdruckmessumformer nach Anspruch 7, wobei die Hülse eine zweite Hülsendichtfläche umfasst, und der Sensorhals eine ringförmige Sensorhalsdichtfläche umfasst, wobei mittels der Sensorhalsdichtfläche und der zweiten Hülsendichtfläche sowie einer ggf. eines dazwischen angeordneten Dichtrings eine zweite Öffnung zwischen der Hülse und dem Sensorhals abgedichtet ist.

## Claims

1. Differential pressure transmitter (1), comprising:
a differential pressure sensor (20), which has a signal output in order to emit a signal that depends on a measured difference between a first medium pressure and a second medium pressure, or that represents this difference,
a first process connection flange (50) and a second process connection flange (50),
wherein the differential pressure sensor (20) is fixed between the first process connection flange (50) and the second process connection flange (50) and a first and a second seal, wherein the seals are each arranged between one of the process connection flanges and the differential pressure sensor,
wherein the differential pressure sensor can be exposed to the first medium pressure via the first process connection flange and the second medium pressure via the second process connection flange;
a housing (11), which contains an electronic evaluation circuit, wherein the housing (11) has an input opening (16) via which the signal output of the differential pressure sensor is connected to a signal input of the evaluation circuit, and wherein the housing (11) has at least one extension (12) which extends between the first and second process connection flange (50), wherein the extension is fixed between the flanges (50) in a parallel connection relative to the differential pressure sensor (20) in such a way that the housing is held by the fixed extension,
**characterized in that**
the differential pressure sensor has a sensor neck, wherein the sensor neck extends from a lateral area of the differential pressure sensor into the entry opening of the housing, wherein an open ring junction is formed between the sensor neck and the entry opening of the housing,
wherein the differential pressure transmitter further has a guide sleeve, which is arranged in the open ring junction.

2. Differential pressure transmitter as claimed in Claim 1, wherein the extension has a frame (12) that surrounds the differential pressure sensor.

3. Differential pressure transmitter as claimed in Claim 2, wherein the frame is fixed between the process connection flanges (50) at least on one side, and preferably on both sides, along a closed sealing surface (19).

4. Differential pressure transmitter as claimed in Claim 2 or 3, wherein the outer contour of the frame is aligned with the outer contour of the process connection flanges on the planes of the sealing surfaces.

5. Differential pressure transmitter as claimed in Claim 2, 3 or 4, wherein the differential pressure sensor and the extension are fixed between the process connection flanges via several bolts.

6. Differential pressure transmitter as claimed in Claim 5, wherein the bolts are surrounded by an outer contour of the frame.

7. Differential pressure transmitter as claimed in one of the Claims 1 to 6, wherein the sleeve comprises a first sleeve sealing surface, and the housing comprises an entry sealing surface surrounding the entry opening, wherein a first opening between the sleeve and the housing is sealed via the entry sealing surface and the first sleeve sealing surface as well as possibly via a sealing ring arranged between the two.

8. Differential pressure transmitter as claimed in Claim 7, wherein the sleeve comprises a second sleeve sealing surface, and the sensor neck comprises a ring-shaped sensor neck sealing surface, wherein a second opening between the sleeve and the sensor neck is sealed via the sensor neck sealing surface and the second sleeve sealing surface as well as possibly via a sealing ring arranged between the two.

## Revendications

1. Transmetteur de pression différentielle, comprenant :
un capteur de pression différentielle (20), qui présente une sortie signal afin d'émettre un signal dépendant d'une différence mesurée entre une première pression de produit et une deuxième pression de produit, ou qui représente cette différence,
une première bride de raccordement au process (50) et une deuxième bride de raccordement au process (50),
le capteur de pression différentielle (20) étant fixé entre la première bride de raccordement au process (50) et la deuxième bride de raccordement au process (50) et un premier et un deuxième joint, les joints étant disposés respectivement entre les brides de raccordement au process et le capteur de pression différentielle,
le capteur de pression différentielle pouvant être alimenté, par l'intermédiaire de la première bride de raccordement au process, avec la première pression de produit et, par l'intermédiaire de la deuxième bride de raccordement au process, avec la deuxième pression de produit ;
un boîtier (11), lequel contient un circuit d'exploitation électronique, le boîtier (11) présentant une ouverture d'entrée (16), à travers laquelle la sortie signal du capteur de pression différentielle est raccordée à une entrée signal du circuit d'exploitation, et le boîtier (11) présentant au minimum un prolongement (12), qui s'étend entre la première et la deuxième bride de raccordement au process (50), le prolongement étant fixé dans la dérivation relative au capteur de pression différentielle (20) entre les brides (50), de telle sorte que le boîtier est maintenu par le prolongement fixé,
**caractérisé en ce que**
le capteur de pression différentielle présente un col de capteur, ce dernier s'étendant depuis une surface latérale du capteur de pression différentielle jusque dans l'ouverture d'entrée du boîtier, une fente annulaire étant formée entre le col de capteur et l'ouverture d'entrée du boîtier,
le transmetteur de pression différentielle présentant en outre une douille de guidage, laquelle est disposée dans la fente annulaire.

2. Transmetteur de pression différentielle selon la revendication 1, pour lequel le prolongement présente un cadre (12), lequel entoure le capteur de pression différentielle.

3. Transmetteur de pression différentielle selon la revendication 2, pour lequel le cadre est fixé au moins d'un côté, de préférence des deux côtés, le long d'une surface d'étanchéité (19) fermée en soi, entre les brides de raccordement au process (50).

4. Transmetteur de pression différentielle selon la revendication 2 ou 3, pour lequel le contour extérieur du cadre affleure, dans les plans des surfaces d'étanchéité, le contour extérieur des brides de raccordement au process.

5. Transmetteur de pression différentielle selon la revendication 2, 3 ou 4, pour lequel le capteur de pression différentielle et le prolongement sont fixés au moyen de plusieurs boulons entre les brides de raccordement au process.

6. Transmetteur de pression différentielle selon la revendication 5, pour lequel les boulons sont entourés par un contour extérieur du cadre.

7. Transmetteur de pression différentielle selon l'une des revendications 1 à 6, pour lequel la douille comprend une première surface d'étanchéité de douille et pour lequel le boîtier comprend une surface d'étanchéité d'entrée entourant l'ouverture d'entrée, une première ouverture entre la douille et le boîtier étant rendue étanche au moyen de la surface d'étanchéité d'entrée et de la première surface d'étanchéité de douille, ainsi qu'avec une éventuelle bague d'étanchéité disposée entre les deux.

8. Transmetteur de pression différentielle selon la revendication 7, pour lequel la douille comprend une deuxième surface d'étanchéité de douille et pour lequel le col de capteur comprend une surface d'étanchéité de col de capteur annulaire, une deuxième ouverture entre la douille et le col de capteur étant rendue étanche au moyen de la surface d'étanchéité de col de capteur et de la deuxième surface d'étanchéité de douille, ainsi qu'avec une éventuelle bague d'étanchéité disposée entre les deux.
